(19) Europäisches Patentamt
European Patent Office
Office européen des brevets

(11) **EP 1 961 480 B1**

(12) **EUROPEAN PATENT SPECIFICATION**

(45) Date of publication and mention
of the grant of the patent:
**03.03.2010 Bulletin 2010/09**

(51) Int Cl.:
***B01D 53/86*** *(2006.01)*      ***B01J 23/42*** *(2006.01)*
***B01J 35/04*** *(2006.01)*      ***B01J 37/02*** *(2006.01)*
***F01N 3/28*** *(2006.01)*

(21) Application number: **07018105.2**

(22) Date of filing: **14.09.2007**

(54) **Honeycomb structured body**

Wabenstrukturkörper

Corps structuré en nid d'abeille

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **06.02.2007 PCT/JP2007/052004**

(43) Date of publication of application:
**27.08.2008 Bulletin 2008/35**

(73) Proprietor: **IBIDEN CO., LTD.
Ogaki-shi
Gifu 503-8604 (JP)**

(72) Inventors:
• **Ohno, Kazushige
Ibi-gun
Gifu 501-0695 (JP)**
• **Ido, Takahiko
Ibi-gun
Gifu 501-0695 (JP)**
• **Kasai, Chizuru
Ibi-gun
Gifu 501-0695 (JP)**

(74) Representative: **HOFFMANN EITLE
Patent- und Rechtsanwälte
Arabellastrasse 4
81925 München (DE)**

(56) References cited:
EP-A- 1 338 326        EP-A- 1 736 220
WO-A-2006/025613     US-A- 4 916 107
US-A- 5 753 581

**Description**

The present invention relates to a honeycomb structured body.

BACKGROUND ART

In order to convert exhaust gases discharged from internal combustion engines of vehicles, such as buses or trucks, construction machines and the like, a honeycomb catalyst, which allows exhaust gases to pass through the inside thereof to convert the exhaust gases has been used, and conventionally, with respect to the honeycomb catalyst, for example, such a catalyst has been proposed in which a material having a high specific surface area such as active alumina, and a catalyst such as platinum, are supported on the surface of a cordierite-base honeycomb structured body having an integral structure and a low thermal expansion property. Moreover, the catalyst has been also proposed in which an alkali-earth metal such as Ba is supported thereon as a NOx absorbing agent so as to be used for NOx treatment in an atmosphere with excessive oxygen such as an atmosphere in a lean burn engine and a diesel engine.

Here, in order to improve the conversion performance, it is necessary to increase the probability of contact between exhaust gases and a catalyst noble metal as well as the NOx absorbing agent. For this purpose, the supporting carrier needs to have a higher specific surface area.

As the supporting carrier having a high specific surface area, a honeycomb structured body comprising honeycomb fired bodies, each of which is formed by bonding a high specific surface material such as active alumina as a main material with an inorganic fibers serving as a reinforcing material by an inorganic binder to be molded into a honeycomb shape, followed by firing, has been known. Moreover, in order to achieve a large-size honeycomb structured body, such a structured body in which honeycomb fired bodies are bonded to one another by interposing adhesive layers has been known (for example, see Patent Document 1).

Patent Document 1: JP-A No. 2005-218935

DISCLOSURE OF THE INVENTION

PROBLEMS TO BE SOLVED BY THE INVENTION

In the honeycomb structured body used in Patent Document 1, since the supporting carrier is designed to have a large specific surface area, it is possible to provide a honeycomb structured body having a high exhaust-gas converting performance by highly dispersing a catalyst such as platinum supported thereon. However, in the case where the honeycomb structured body of Patent Document 1 is used as a catalyst supporting carrier for converting exhaust gases for a long period of time at high temperatures, since the catalyst such as platinum causes sintering to form bulky particles, it is not possible to maintain a state of highly dispersed catalyst, resulting in a reduction in the exhaust-gas converting performance in some cases. For this reason, there have been strong demands for a honeycomb structured body that can maintain the highly-dispersed state of the catalyst such as platinum even after it has been used as a catalyst supporting carrier for converting exhaust gases for a long period of time.

MEANS FOR SOLVING THE PROBLEMS

In order to solve the aforementioned problems, the present inventors have studied hard, and found that, in addition to providing a high specific area to a honeycomb structured body, by highly dispersing catalyst particles onto the portion of high specific surface area of the honeycomb structured body, it is possible to maintain the highly-dispersed state of the catalyst over the high specific surface area portion of the honeycomb structured body even after it has been used as a catalyst supporting carrier for converting exhaust gases for a long period of time, and consequently it is possible to provide a honeycomb structured body that is superior in exhaust-gas converting performance when used as a catalyst supporting carrier; thus, the present invention has been completed.

In other words, the honeycomb structured body of the present invention is a honeycomb structured body configured by a large number of cells longitudinally placed in parallel with one another with a cell wall therebetween, which includes inorganic particles, an inorganic fiber matter, an inorganic binder, and a catalyst, wherein an area occupied by the catalyst supported on a surface of the inorganic fiber matter is 5% or less of the sum of an area occupied by the catalyst supported on a surface of the inorganic particles, an area occupied by the catalyst supported on a surface of the inorganic fiber matter, and an area occupied by the catalyst supported on the surface of the inorganic binder.

In the honeycomb structured body of the present invention, the area occupied by the catalyst supported on the surface of the inorganic fiber matter is desirably 3% or less of the sum of the area occupied by the catalyst supported on the surface of the inorganic particles, the area occupied by the catalyst supported on the inorganic fiber matter, and the area occupied by the catalyst supported on the surface of the inorganic binder.

In the honeycomb structured body of the present invention, the inorganic fiber matter preferably includes inorganic fibers.

The inorganic fiber matter preferably includes whiskers.

The inorganic fiber matter preferably includes inorganic fibers and whiskers.

In the honeycomb structured body of the present invention, the catalyst is preferably a noble metal.

The honeycomb structured body of the present invention preferably includes a plurality of honeycomb segments combined with one another by interposing adhesive paste layers.

The honeycomb structured body of the present invention is preferably configured by a single honeycomb segment.

The honeycomb structured body of the present invention is preferably used for converting exhaust gases from a vehicle.

EFFECTS OF THE INVENTION

In the honeycomb structured body of the present invention, an area occupied by the catalyst supported on a surface of the inorganic fiber matter is 5% or less of the sum of an area occupied by the catalyst supported on a surface of the inorganic particles, an area occupied by the catalyst supported on a surface of the inorganic fiber matter, and an area occupied by the catalyst supported on the surface of the inorganic binder.

The inorganic fiber matter forms a low specific surface area portion of the honeycomb structured body, and since hardly any catalyst is supported on this low specific surface area portion in the honeycomb structured body of the present invention, most of the catalyst is highly dispersed and supported on the high specific surface area portion of the honeycomb structured body of the present invention.

Here, since the catalyst supported on the high specific surface portion hardly causes sintering when the honeycomb structured body is used as an exhaust-gas converting catalyst for a long period of time under high temperatures, the honeycomb structured body of the present invention supporting most of the catalyst on its high specific surface area portion in a highly dispersed state allows the catalyst to retain its highly dispersed state, while keeping its high specific surface area, on the high specific surface area portion even after having been used as a catalyst supporting carrier used for converting exhaust gases for a long period of time at high temperatures, thereby making it possible to achieve a superior exhaust-gas converting performance.

BEST MODE FOR CARRYING OUT THE INVENTION

The following description will discuss a honeycomb structured body in accordance with the present invention. The honeycomb structured body of the present invention is a honeycomb structured body configured by a large number of cells longitudinally placed in parallel with one another with a cell wall therebetween. The cell wall includes inorganic particles, 5% by weight or more of an inorganic fiber matter, an inorganic binder, wherein a catalyst is supported on the cell wall, and an area occupied by the catalyst supported on a surface of the inorganic fiber matter is 5% or less of the sum of an area occupied by the catalyst supported on a surface of the inorganic particles, an area occupied by the catalyst supported on a surface of the inorganic fiber matter, and an area occupied by the catalyst supported on the surface of the inorganic binder.

Honeycomb structure bodies, which differs from the honeycomb structure body of the present invention in that the content of inorganic fiber matter is less than 5 % by weight, are inherently disclosed in the prior art (see US 4916 107 A, EP 1 338 326 A1 or EP 1 736 220 A1).

In the honeycomb structured body of the present invention, the inorganic fiber matter preferably includes any of inorganic fibers, whiskers and a combination of inorganic fibers and whiskers.

The following description will discuss a honeycomb structured body of the present invention by exemplifying a structure in which the inorganic fiber matter is inorganic fibers.

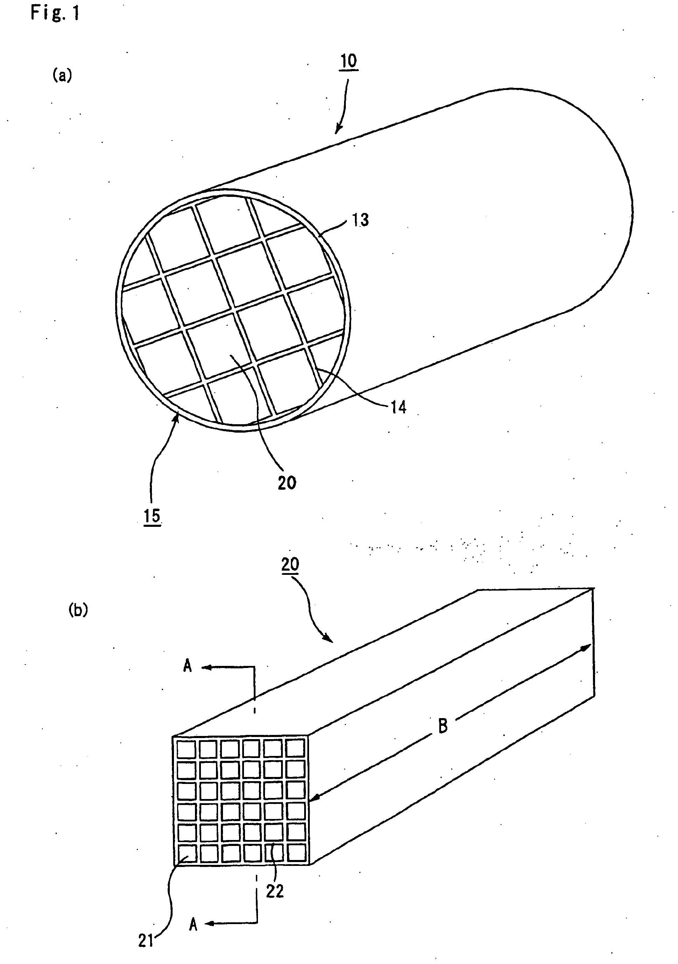

Fig. 1(a) is a perspective view that schematically shows one example of a honeycomb structured body of the present invention, and Fig. 1(b) is a perspective view that schematically shows one example of a honeycomb segment. In a honeycomb structured body 10 of the present invention shown in Fig. 1(a), a plurality of honeycomb segments 20, each including a ceramic material such as porous alumina with a rectangular pillar-shape as shown in Fig. 1(b), are combined with one another by interposing adhesive layers 14 to constitute a ceramic block 15, and a sealing material layer 13 is formed on the periphery of the ceramic block 15.

A honeycomb segment 20 shown in Fig. 1(b) includes a honeycomb fired body having a plurality of cells 21 placed in parallel with one another in a longitudinal direction (in a direction shown by an arrow B in Fig. 1(b)) with a cell wall 22 therebetween, and a catalyst for converting exhaust gases supported on the cell walls 22.

The cells 21 allow fluids such as exhaust gases to flow therethrough, and since the catalyst used for converting exhaust gases is supported on the cell walls 22, toxic components contained in the exhaust gases flowing through the cells can be converted by the function of the catalyst.

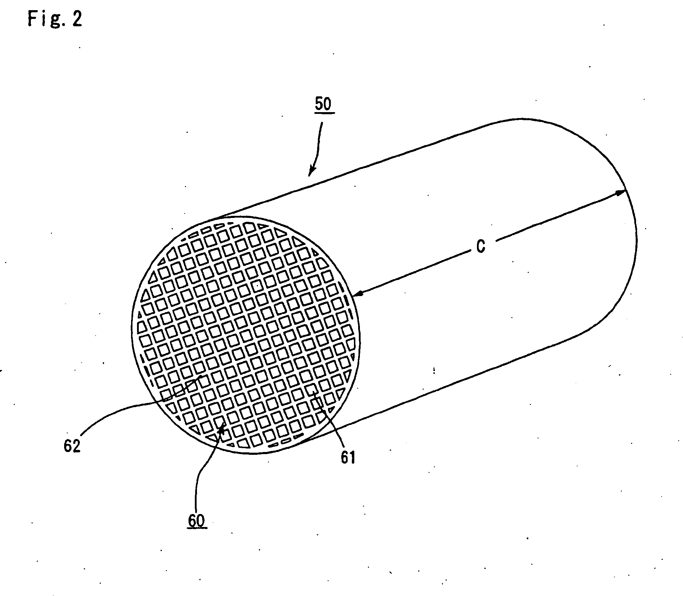

Fig. 2 is a perspective view that schematically shows another example of the honeycomb structured body of the present invention.

The honeycomb structured body 50 is a honeycomb structured body configured by a single honeycomb segment 60. The honeycomb structured body 50 has a large number of cells 61 longitudinally placed in parallel with one another (in a direction shown by arrow C in Fig. 2) with a cell wall 62 therebetween, and those cells 61 allow fluids such as exhaust gases to flow therethrough.

Here, a catalyst used for converting exhaust gases is supported on the cell walls 62 so that the toxic components contained in the exhaust gases flowing through the cells can be converted by the function of the catalyst.

In the honeycomb structured body of the present invention, the area occupied by the catalyst supported on the surface of the inorganic fiber matter is 5% or less of the sum of the area occupied by the catalyst supported on the surface of the inorganic particles, the area occupied by the catalyst supported on the inorganic fiber matter and the area occupied by the catalyst supported on the surface of the inorganic binder.

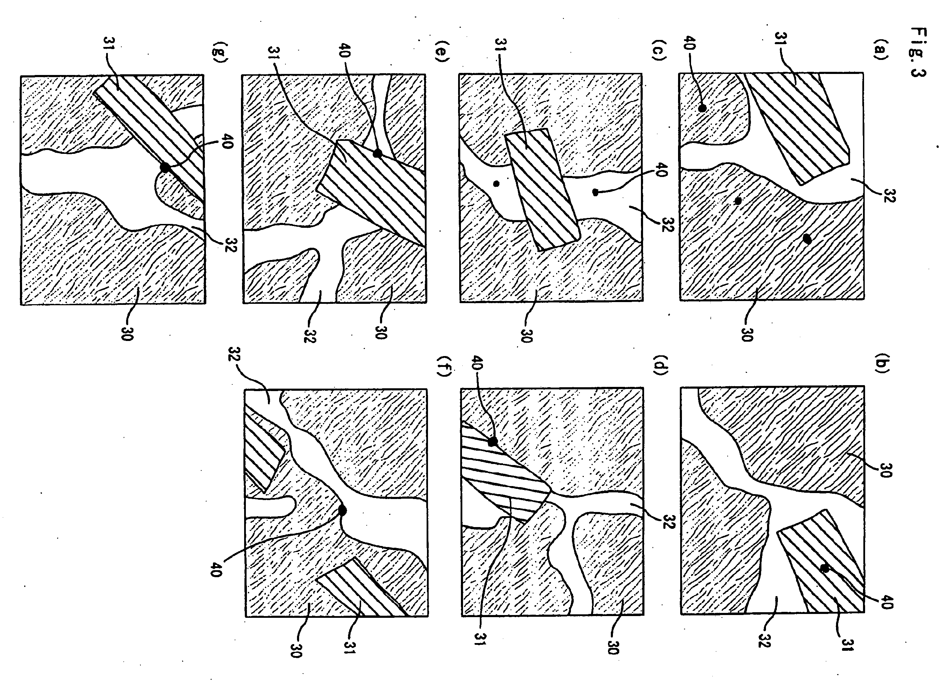

Figs. 3(a) to 3(g) are schematic drawings each of which shows one portion of an image of a cell wall of the honeycomb structured body of the present invention, photographed in an enlarged manner by an electron microscope. In the cell walls shown in Figs. 3 (a) to 3 (g), inorganic particles 30 and inorganic fibers 31 are bonded to each other through an inorganic binder 32, and a catalyst 40 is supported thereon.

Figs. 3(a) to 3(g) show modes of portions on which the catalyst 40 is supported, in a separated manner.

In other words, in Fig. 3(a), the catalyst 40 is supported on the surface of the inorganic particles 30; in Fig. 3(b), the catalyst 40 is supported on the surface of the inorganic fibers 31; and in Fig. 3(c), the catalyst 40 is supported on the surface of the inorganic binder 32.

In Fig. 3(d), the catalyst 40 is supported on both of the surface of the inorganic particles 30 and the surface of the inorganic fibers 31; in Fig. 3(e), the catalyst 40 is supported on both of the surface of the inorganic fibers 31 and the surface of the inorganic binder 32; and in Fig. 3(f), the catalyst 40 is supported on both of the surface of the inorganic particles 30 and the surface of the inorganic binder 32.

In Fig. 3(g), the catalyst 40 is supported on the surface of the inorganic particles 30, the surface of the inorganic fibers 31 and the surface of the inorganic binder 32.

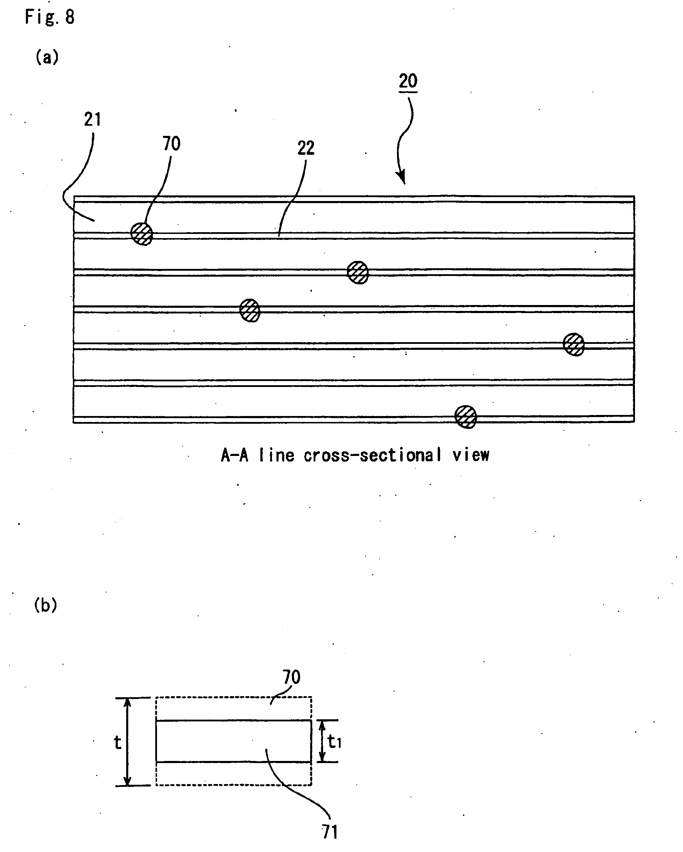

In the present invention, the area occupied by the catalyst supported on the surface of the inorganic fiber matter refers to an area occupied by the catalyst supported on the surface of the inorganic fiber matter in the image of the cell wall that has been taken in such a manner that a microscope' observation portion 70 (see Fig. 8(a)) corresponding to an optional portion on the cell wall placed on the honeycomb structured body on which the catalyst is supported is photographed by using an electron microscope such as a TEM (transmission electron microscope) and an SEM (scanning electron microscope).

Moreover, the sum of the area occupied by the catalyst supported on the surface of the inorganic particles, the area occupied by the catalyst supported on the inorganic fiber matter and the area occupied by the catalyst supported on the surface of the inorganic binder refers to the total areas of the area occupied by the catalyst supported on the surface of the inorganic particles, the area occupied by the catalyst supported on the surface of the inorganic fiber matter and the area occupied by the catalyst supported on the surface of the inorganic binder in the image of the cell walls.

Here, the area occupied by the catalyst supported on the surface of the inorganic fiber matter refers to the total area of the area occupied by the catalyst supported on the surface of the inorganic fibers and the area occupied by the catalyst supported on the surface of the whiskers in the case where the inorganic fibers and whiskers are present in the image; the area occupied by the catalyst supported on the surface of the inorganic fibers in the case where only the inorganic fibers are presenting the image; and the area occupied by the catalyst supported on the surface of the whiskers in the case where only the whiskers are present in the image.

Moreover, as shown in Figs. 3(d) to 3(g), when the catalyst 40 is supported on the surfaces of a plurality of components among the inorganic particles 30, the inorganic fibers 31 and the inorganic binder 32 each configuring the cell walls of the honeycomb structured body, the area obtained by dividing the area occupied by the catalyst 40 in the image by the number of the components on which the catalyst 40 is supported, is assigned as the area occupied by the catalyst 40 on the surface of each of the components.

For example, in Fig. 3(d), since the catalyst 40 is supported on both of the surfaces of the inorganic particles 30 and the inorganic fibers 31, a half of the area of the catalyst 40 is respectively assigned as the area occupied by the catalyst 40 supported on the surface of the inorganic particles 30 and as the area occupied by the catalyst 40 supported on the surface of the inorganic fibers 31.

In the present invention, the area occupied by the catalyst supported on the surface of the inorganic fiber matter being 5% or less of the sum of the area occupied by the catalyst supported on the surface of the inorganic particles, the area occupied by the catalyst supported on the inorganic fiber matter and the area occupied by the catalyst supported on the surface of the inorganic binder means that, when the rate of the area occupied by the catalyst supported on the surface of the inorganic fiber matter to the sum of the areas occupied by the catalyst supported on the surfaces of the inorganic particles, inorganic fiber matter and the inorganic binder is calculated in each of the images obtained by taking images of optional five portions on the cell wall by using an electron microscope, the average value of the rates of the aforementioned occupied area in the five images is 5% or less.

Here, with respect to the electron microscope, FE-TEM HF-2000 manufactured by Hitachi, Ltd., or an apparatus having the same performances as this apparatus may be used.

Fig. 4 is a photograph that shows one example of an image of a cell wall of the honeycomb structured body of the present invention, which was taken at a magnification of 50,000 times by using an electron microscope.

Fig. 5 is a photograph that shows one example of an image of another cell wall provided in the same honeycomb structured body as shown in Fig. 4, which was taken at a magnification of 50,000 times by using an electron microscope.

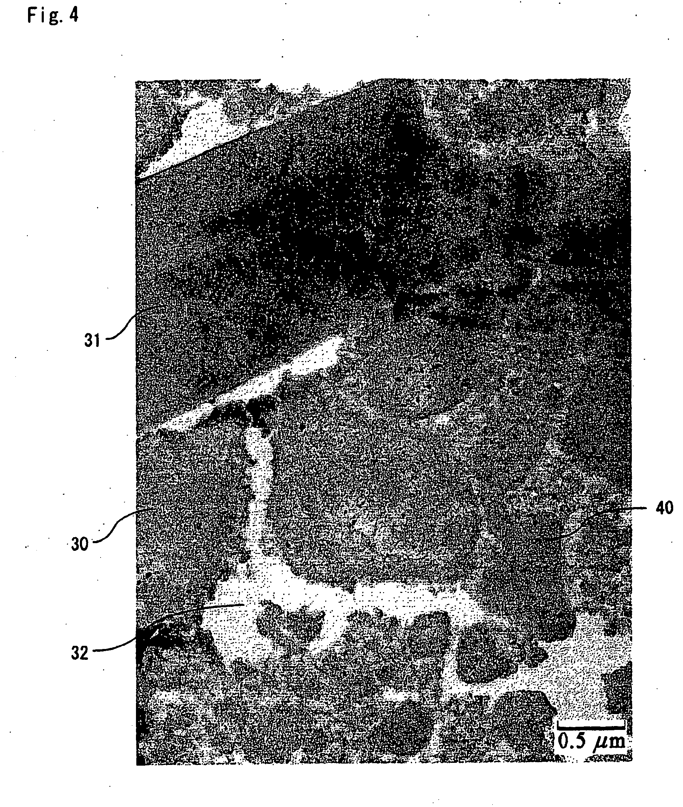

In the cell wall shown in Fig. 4, the inorganic particles 30 and the inorganic fibers 31 are bonded to each other by interposing the inorganic binder 32, and the catalyst 40 is supported on the surface of the inorganic particles 30.

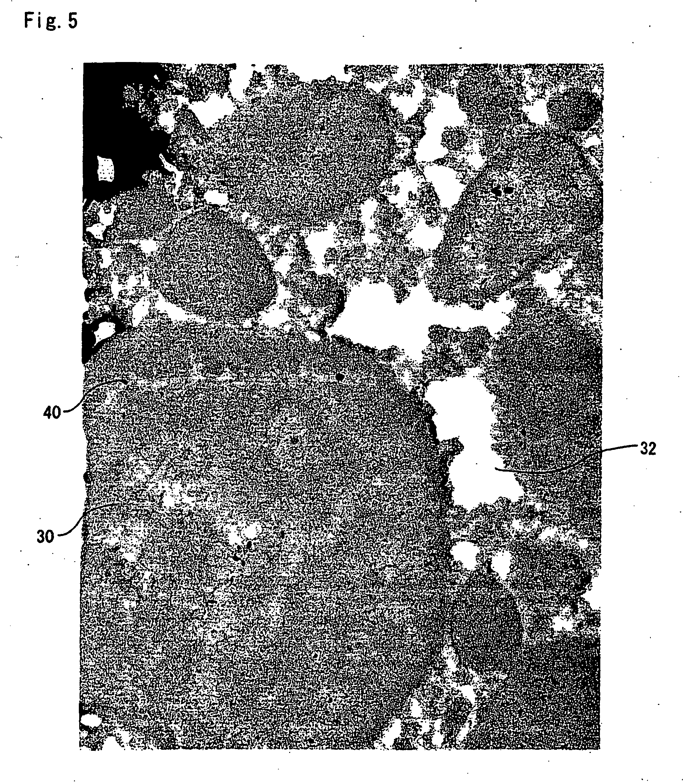

Moreover, the cell wall shown in Fig. 5 illustrates a state in which the catalysts 40 are supported on the surface of the inorganic particles 30.

Among materials forming the honeycomb structured body of the present invention, the inorganic particles and the inorganic binder have a specific surface area in a range of 30 to 300 ($m^2$/g) per unit weight, meaning that these materials have a higher specific surface area than the inorganic fiber matter.

In contrast, the inorganic fiber matter is a material having a comparatively low specific surface area per unit weight as compared with the inorganic particles and the inorganic binder and, for example, its specific surface area per unit weight is in a range of 0.01 to 30 ($m^2$/g).

The following description will discuss the relationship between the high or low of the specific surface area and the easiness of catalyst sintering.

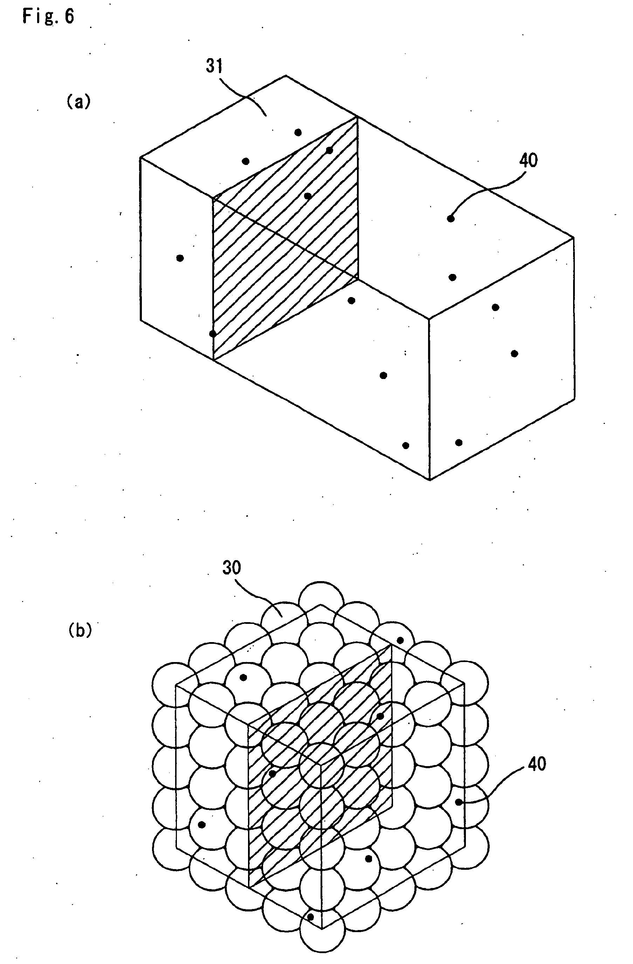

Fig. 6(a) is a perspective view that schematically shows inorganic fibers as an example of the material having a low specific surface area, and Fig. 6(b) is a perspective view that schematically shows inorganic particles as an example of the material having a high specific surface area.

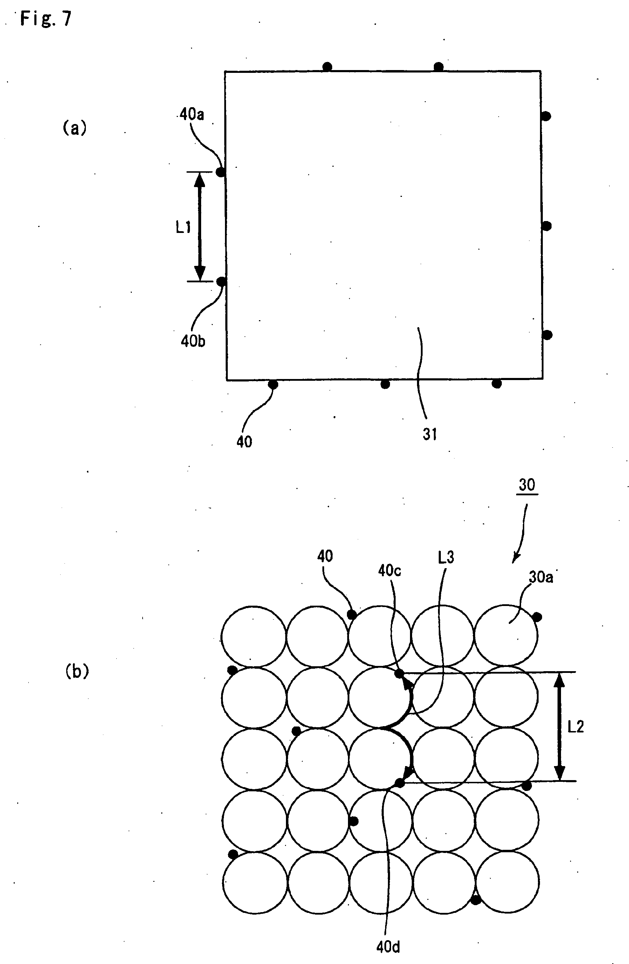

Moreover, Fig. 7(a) is a cross-sectional view of Fig. 6(a) shown in a two-dimensional model obtained by cutting the three dimensional model through cross sections indicated by the shaded area shown in the figure so as to briefly explain the Fig. 6(a), and Fig. 7(b) is a cross sectional view of Fig. 6(b) shown in a two-dimensional model obtained by cutting the three dimensional model through cross sections indicated by the shaded area shown in the figure so as to briefly explain the Fig. 6(b).

The inorganic fibers shown in Fig. 6(a) and the inorganic particles shown in Fig. 6(b) are presumed to have catalysts supported on the respective surfaces.

With respect to the inorganic fibers 31, as shown in Fig. 6(a), no spaces are present in the inorganic fibers 31. In contrast, as shown in Fig. 6(b), each of the inorganic particles 30 has a shape in which a large number of primary particles 30a having a small particle diameter are aggregated, and spaces are also present among the primary particles 30a. For this reason, when the specific surface areas of the inorganic fibers 31 and the inorganic particles 30 are compared with each other on the same occupied volume, the specific surface area of the inorganic particles 30 becomes larger than the specific surface area of the inorganic fibers 31.

The following description will discuss a mechanism that allows the catalyst to cause sintering by using two-dimensional models thereon shown in Figs. 7(a) and 7(b).

In the case where the same amount of catalysts 40 (ten particles per cross-sectional face in Figs. 7(a) and 7(b)) are supported on each of the surfaces of the inorganic fibers 31 and the inorganic particles 30, the catalyst 40 is distributed only on the peripheral portion of each inorganic fiber 31 in the case of the inorganic fibers 31; in contrast, the catalyst 40 is distributed on the surfaces of the respective primary particles 30a in a dispersed manner in the case of the inorganic particles 30.

In order to allow the catalyst to cause sintering, the adjacent catalysts need to be made in contact with each other; therefore, the easiness of catalyst sintering is dependent on the distance between the adjacent catalysts.

Upon comparison between Figs. 7(a) and 7(b), in the inorganic fibers shown in Fig. 7(a), the supportable area of catalyst is limited to only the peripheral portion of the inorganic fiber 31 (only the surface of the inorganic fiber 31) ; in contrast, in the inorganic particles 30 shown in Fig. 7(b), the supportable area of the catalyst corresponds to the most of the surface of each primary particle 30a. For this reason, the inorganic particles have a larger catalyst supportable area, and when the same amount of catalyst is supported, the catalyst is supported on the inorganic particles in a more thinly scattered manner.

Therefore, the average value of the spatial distances (that is, the shortest distance) between the adjacent catalysts becomes longer in the catalyst supported on the inorganic particles than in the catalyst supported on the inorganic fibers.

Moreover, in order to allow the adjacent catalysts to cause sintering, the catalysts need to be mutually made in contact while the catalysts are moving on the surface of the supporting carrier. Therefore, it can be said that the distance in which the catalysts move on the surface of the supporting carrier to be made in contact with each other corresponds to an effective distance that has an influence on whether or not the adjacent catalysts are made in contact so as to cause sintering.

Since the adjacent catalysts on the inorganic fiber shown in Fig. 7(a) move linearly to come into contact with each other, the effective distance between the catalysts is the same as the linear distance between the adjacent catalysts. On the other hand, in the case of the inorganic particles shown in Fig. 7(b), the adjacent catalysts, which cannot move linearly to come into contact with each other, move along a curved line to come into contact with each other, with the result that the effective distance between the catalysts becomes longer than the linear distance between the adjacent catalysts.

Therefore, the average value of the effective distances between the adjacent catalysts becomes longer in the catalysts supported on the inorganic particles than in the catalysts supported on the inorganic fibers.

The following description will discuss the effective distances between the two catalysts supported on the surface of inorganic fibers or inorganic particles specifically in comparison with each other, supposing that the spatial distances between the catalysts supported on the surfaces of each inorganic fiber and each inorganic particle are equal to each other. For comparison, supposing that the linear distance between catalysts 40a and 40b supported on the surface of the inorganic fiber 31 is L1, and the linear distance between catalysts 40c and 40d supported on the surface of the inorganic particle 30 is L2, L1 and L2 are presumed to be equal.

First, with respect to the effective distance required for the respective catalysts 40a and 40b supported on the surface of the inorganic fiber 31 to move so as to come into contact with each other, the effective distance corresponds to the linear distance L1 between the catalysts 40a and 40b.

In contrast, in order to allow the catalysts 40c and 40d supported on the surface of the inorganic particle 30 to come into contact with each other, since the respective catalysts need to move on the surface of the primary particle 30a, the effective distance corresponds to L3 (length of the curved line indicated by a thick line in Fig. 7(b)). Moreover, the distance L3 is longer than the linear line distance L2 between the catalysts 40c and 40d. Here, since the L1 and the L2 are equal to each other, L3 is longer than L1.

Therefore, in order to allow the catalyst particle 40c and the catalyst particle 40d supported on the surface of the inorganic particle 30 to come into contact with each other, those particles need to move a longer distance in comparison with the contact between the catalyst 40a and the catalyst 40b supported on the surface of the inorganic fiber 31. For this reason, in comparison with the catalysts 40a and 40b supported on the surface of the inorganic fiber 31, the catalysts 40c and 40d, supported on the inorganic particle 30, tend not to contact with each other, and hardly cause sintering.

In this manner, as compared with the structure in which the catalyst is supported on the surface of the inorganic fibers, the structure in which the catalyst is supported on the surface of the inorganic particles makes it possible to lengthen the spatial distance (shortest distance) as well as the effective distance (actual moving distance on the supporting carrier surface) between the adjacent catalysts. For this reason, it is possible to prevent the catalyst from sintering.

Here, in the aforementioned schematic drawings, the primary particles of the inorganic particles are illustrated on the assumption that they have a spherical shape; however, even when the shape of the inorganic particles is not a spherical shape, the catalyst supported on the inorganic particles having a high specific surface area tends not to cause sintering based upon the same principle.

In the case where $\gamma$-alumina particles are used as the inorganic particles, although the primary particles are in a shape of short fiber, the catalyst supported on the $\gamma$-alumina particles tends not to cause sintering based upon the same principle.

As a result, even after the honeycomb structured body has been used for a long period of time at high temperatures, the catalysts supported on the surfaces of the inorganic particles and the inorganic binder tend not to cause sintering, and thus hardly form bulky particles. For this reason, it is possible to maintain a state in which the surface of the catalyst contributing to the reaction is widely exposed, and consequently to hardly reduce the specific surface area of the catalyst supported on the surfaces of the inorganic particles and the inorganic binder.

In contrast, in the catalyst supported on a portion having a low specific surface area, since the distance between the catalysts is short as described above, the possibility of mutual contact between the catalysts becomes higher when the honeycomb structured body is used at high temperatures for a long period of time as a catalyst supporting carrier for use in converting exhaust gases, and thus sintering is easily caused. Therefore, the catalysts supported on the surface of the inorganic fiber matter tend to cause sintering.

As a result, when the honeycomb structured body is used for a long period of time at high temperatures, the catalysts supported on the surface of the inorganic fiber matter tend to easily form bulky particles, and the specific surface area of the catalyst supported on the surface of the inorganic fiber matter may be reduced.

Here, the specific surface area of each of the inorganic particles, the inorganic binder and the inorganic fiber matter can be obtained through a measuring method in which, in compliance with JIS-R-1626 (1996) determined by JIS Standard, a BET specific surface area measuring process is carried out through a one-point method using $N_2$ gas so that a specific surface area ($m^2/g$) per unit weight is measured. Here, the specific surface area of the inorganic binder can be obtained by carrying out measurements on solid components after moisture has been removed.

In the honeycomb structured body of the present invention, the area occupied by the catalyst supported on the surface of the inorganic fiber matter is 5% or less of the sum of the areas occupied by the catalyst supported on the surfaces of the inorganic particles, the inorganic fiber matter and the inorganic binder.

That is, in the honeycomb structured body, the amount of the catalyst supported on the surface of the inorganic fiber matter having a low specific surface area is small, and the most of the catalyst is supported on the surfaces of the inorganic particles, each having a high specific surface area.

Therefore, even after having been used at high temperatures for a long period of time as a catalyst supporting carrier for use in converting exhaust gases, the most of the catalysts are free from sintering, and there is hardly any reduction in the specific surface area of the catalyst in the honeycomb structured body as a whole.

Consequently, the honeycomb structured body of the present invention can provide a honeycomb structured body having a superior exhaust-gas conversion performance, which, even after having been used for a long period of time at high temperatures as a catalyst supporting carrier for converting exhaust gases, is capable of maintaining a state of highly dispersed catalyst in which the catalyst is dispersed on a portion of the honeycomb structured body having a high specific surface area, with its specific surface area maintained in a high level.

In the honeycomb structured body of the present invention, it is not necessary to carry out measurements on all the cell walls of the honeycomb structured body in order to obtain the rate of the area occupied by the catalyst supported on the surface of the inorganic fiber matter.

Fig. 8(a) is an A-A line cross-sectional view of the honeycomb segment shown in Fig. 1(b), which schematically shows one example of a portion of a cell wall for microscopic observation. Fig. 8(b) is a cross-sectional view that schematically shows a sample for the microscopic observation, which is manufactured by grinding the portion of a cell wall for microscopic observation, shown in Fig. 8(a).

In order to obtain the rate of the area occupied by the catalyst supported on the surface of the inorganic fiber matter, it is sufficient to carry out the following processes: sampling processes are carried out on optional five portions of a cell wall 22 serving as microscopic observation portion 70, as shown in Fig. 8(a), and the average value thereof is obtained.

The reason for this is because, as shown in Figs. 3(a) to 3(g), the rate of each area occupied by the inorganic particles 30, the inorganic fibers 31 (inorganic fiber matter) or the inorganic binder 32 in one image is almost constant, regardless of a location of the cell walls to be sampled.

In particular, in the case where a TEM observation is carried out, it is necessary to carry out a grinding process on each of the microscopic observation portion 70 and, for example, as shown in Fig. 8(b), both of the faces of the microscopic observation portion 70 having a thickness of "t" are ground from a solid line portion to a broken line portion to form a sample 71 for microscopic observation having a thickness of "t1". Here, since the inorganic particles, the inorganic fiber matter and the inorganic binder, which configure a honeycomb structured body, are present virtually at constant rates with respect to the thickness direction of the cell wall as well, and also the rates of the catalyst to be supported are not dependent on the thickness direction of the cell wall, it is only necessary to grind the microscopic observation potion 70 up to an optional thickness that allows the microscopic observation portion 70 to become observable by a microscope and then observe the portion by the microscope. Therefore, it is not necessary to carry out measurements on all the portions with respect to the thickness direction.

In the honeycomb structured body of the present invention, it is preferable that the area occupied by the catalyst supported on the surface of the inorganic fiber matter is 5% or less and 0.1% or more, of the areas occupied by the catalysts supported on the surfaces of the inorganic particles, the inorganic fiber matter and the inorganic binder. With this structure, it becomes possible to improve the initial catalytic reaction.

In the honeycomb structured body of the present invention, the average particle diameter of catalyst particles supported on the surface of the inorganic particles or the inorganic binder is preferably 50 nm or less. The reason for this is because the smaller the particle diameter of the catalyst particles, the higher the specific surface area of the catalyst becomes.

Here, the particle diameter of the catalyst particles is obtained an average value of diameters of circles measured by fitting a catalyst particle, which is present in each of the five images photographed upon obtaining the area occupied by the catalyst supported on the surface of the inorganic fiber matter in the aforementioned process, in a circle having the same area as the catalyst particle, and calculating the average value of the diameters of the circles in five images.

Moreover, in the honeycomb structured body of the present invention, the area occupied by the catalyst supported on the surface of the inorganic fiber matter is preferably 3% or less of the sum of the area occupied by the catalyst supported on the surface of the inorganic particles, the area occupied by the catalyst supported on the inorganic fiber matter and the area occupied by the catalyst supported on the surface of the inorganic binder.

When the area occupied by the catalyst is 3% or less, it becomes possible to provide a honeycomb structured body which can maintain a state of highly dispersed catalyst, in which more catalyst is supported on the high specific surface area portion of the honeycomb structured body while maintaining its high specific surface area, even after having been used for a long period of time at high temperatures as a catalyst supporting carrier used for converting exhaust gases.

Moreover, the catalyst supported on the honeycomb structured body of the present invention is preferably noble metals. Each of these may be used alone, or two or more kinds of these may be used in combination.

With respect to the noble metal, examples thereof include platinum, palladium, rhodium, and the like.

In addition to these, an alkali metal and an alkali-earth metal may be supported on the honeycomb structured body of the present invention. Examples of the alkali metal include potassium, sodium, and the like; and examples of the alkali-earth metal include barium and the like.

Here, with respect to the timing of supporting the catalyst, a supporting process may be carried out after the honeycomb structured body has been manufactured, or may be carried out on inorganic particles as its material composition thereof, although not particularly limited.

Moreover, with respect to the process for supporting the catalyst, although not particularly limited, an impregnation method or the like may be used.

The honeycomb structured body of the present invention includes inorganic particles and an inorganic fiber matter.

The inorganic particles improve the specific surface area per unit volume of the honeycomb structured body, and the inorganic fiber matter increases the strength of the honeycomb structured body.

With respect to the inorganic particles, those particles including alumina, silica, zirconia, titania, ceria, mullite zeolite and the like are preferably used. Each of these particles may be used alone, or two or more kinds of these may be used in combination.

Among these, in particular, alumina particles and ceria particles are particularly preferable.

As the inorganic fiber matter, inorganic fibers and whiskers, made of alumina, silica, silicon carbide, silica-alumina, glass, potassium titanate, aluminum borate, or the like, are preferably used. One kind of these may be used alone, or two or more kinds of these may be used in combination. Among the inorganic fiber matter, aluminum borate whiskers are more preferably used.

Here, in the present specification, the inorganic fibers and whiskers refer to those having an aspect ratio (length/diameter) exceeding 5. Moreover, with respect to the inorganic fibers and whiskers, a preferable aspect ratio is in a range from 10 to 1000.

With respect to the amount of the inorganic particles contained in the honeycomb structured body, the lower limit is preferably 30% by weight, more preferably 40% by weight, and further more preferably 50% by weight.

On the other hand, the upper limit thereof is preferably 97% by weight, more preferably 90% by weight, further more preferably 80% by weight, and still further more preferably 75% by weight.

The content of the inorganic particles of less than 30% by weight makes the amount of inorganic particles contributing to improvements of the specific surface area per unit volume of the honeycomb structured body relatively small, with the result that the specific surface area per unit volume of the honeycomb structured body becomes small, leading to a failure to highly disperse a catalyst when the catalyst is supported. On the other hand, the content of the inorganic particles exceeding 97% by weight makes the amount of the inorganic fiber matter that devotes to improvement in strength relatively smaller, resulting in a reduction in the strength of the honeycomb structured body.

With respect to the total amount of the inorganic fiber matter contained in the honeycomb structured body, the lower limit is 5% by weight, and further more preferably 8% by weight. On the other hand, the upper limit thereof is preferably 70% by weight, more preferably 50% by weight, further more preferably 40% by weight, and still further more preferably 30% by weight.

The content of the inorganic fiber matter of less than 3% by weight causes a reduction in the strength of the honeycomb structured body; in contrast, the content thereof exceeding 50% by weight makes the amount of the inorganic particles that devotes to improvement of the specific surface area per unit volume of the honeycomb structured body relatively smaller, with the result that the specific surface area of the honeycomb structured body becomes smaller, leading to failure to highly disperse a catalyst upon supporting the catalyst.

As the inorganic binder contained in the honeycomb structured body, an inorganic sol and a clay-type binder may be used, and specific examples of the inorganic sol include alumina sol, silica sol, titania sol, water glass and the like. Moreover, examples of the clay-type binder include clays of the polychain-type structure, such as white clay, kaolin, montmorillonite, sepiolite and attapulgite. Each of these may be used alone, or two or more kinds of these may be used in combination.

Among these, at least one kind of material selected from the group consisting of alumina sol, silica sol, titania sol, water glass, sepiolite and attapulgite is preferably used.

The inorganic sol, clay-type binder and the like contain moisture, and a heating treatment or the like is carried out thereon to remove the moisture so that the remaining inorganic components form an inorganic binder.

The lower limit of the amount of the inorganic binder contained in the honeycomb structured body is preferably 5% by weight, more preferably 10% by weight, and further more preferably 15% by weight, relative to the total amount of the inorganic particles, the inorganic fiber matter and the inorganic binder. On the other hand, the upper limit thereof is preferably 50% by weight, more preferably 40% by weight, and further more preferably 35% by weight.

The content of the inorganic binder of less than 5% by weight may cause a reduction in the strength of the manufactured honeycomb structured body; whereas, the content thereof exceeding 50% by weight tends to cause degradation in moldability.

Although not particularly limited, the lower limit of the thickness of the cell wall of the honeycomb fired body configuring the honeycomb structured body of the present invention is preferably 0.05 mm, more preferably 0.10 mm, and further more preferably 0.15 mm. On the other hand, the upper limit thereof is preferably 0.35 mm, more preferably 0.30 mm, and further more preferably 0.25 mm.

The thickness of the cell wall of less than 0.05 mm may reduce the strength of the honeycomb structured body; in contrast, the thickness of the cell wall exceeding 0.35 mm causes a reduction in the contact area with exhaust gases when the honeycomb structured body is used as a catalyst supporting carrier for converting exhaust gases, and prevents gases from penetrating sufficiently deeper, with the result that the catalyst supported on the inside of the cell wall is hardly made in contact with gases to cause degradation in the gas-conversion performance.

With respect to the cell density of the honeycomb fired body, the lower limit thereof is preferably 15.5 pcs/cm$^2$ (100 cpsi), more preferably 46.5 pcs/ cm$^2$ (300 cpsi), and further more preferably 62.0 pcs/ cm$^2$ (400 cpsi). In contrast, the upper limit of the cell density is preferably 186 pcs/ cm$^2$ (1200 cpsi), more preferably 170.5 pcs/ cm$^2$ (1100 cpsi), and further more preferably 155 pcs/ cm$^2$ (1000 cpsi).

The cell density of less than 15.5 pcs/ cm$^2$ causes a reduction in the wall area to be made in contact with exhaust gases inside the honeycomb fired body when the honeycomb structured body is used as a catalyst supporting carrier for converting exhaust gases, and the cell density exceeding 186 pcs/ cm$^2$ causes an increase in the pressure loss, making it difficult to manufacture the honeycomb fired body.

Moreover, the shape of a cross perpendicular to the longitudinal direction of each of cells formed in the honeycomb fired body section (hereinafter, referred to as "cross section") is not particularly limited, and a virtually triangular shape or a virtually hexagonal shape may be used in addition to a square shape as shown in Fig. 1(b) and Fig. 2.

Although the shape of the honeycomb fired body is not particularly limited, in the case where the honeycomb structured body is configured by combining the honeycomb fired bodies with one another, the shape is preferably a shape that can be easily combined, and examples of the cross sectional shape include a square shape, a rectangular shape, a hexagonal shape, a sector shape and the like.

Moreover, the shape of the honeycomb structured body of the present invention is not limited to a round pillar shape as shown in Fig. 1(a) and Fig. 2, and the honeycomb structured body of the present invention may be a desired shape, such as a cylindroid shape and a rectangular pillar shape.

The following description will discuss the method of manufacturing the honeycomb structured body of the present invention.

First, a material composition is prepared, and an extrusion molding process or the like is carried out by using this material composition to form a honeycomb molded body.

With respect to the material composition, for example, inorganic particles, an inorganic fiber matter, and an inorganic binder are used as main components, and in addition to these, an organic binder, a dispersion medium and a molding assistant are added thereto, if necessary, in accordance with the required moldability.

Examples of the organic binder include methylcellulose, carboxy methylcellulose, hydroxy ethylcellulose, and the like, although not particularly limited thereto.

Each of these may be used alone, or two or more kinds of these may be used in combination.

The compounding amount of the organic binder is preferably set in a range from 1 to 10 parts by weight relative to the total 100 parts by weight of the inorganic particles, the inorganic fiber matter, and the inorganic binder.

Examples of the dispersion medium include water, an organic solvent (benzene or the like), alcohol (methanol or the like) and the like, although not particularly limited thereto.

Examples of the molding assistant include ethylene glycol, dextrin, fatty acid, fatty acid soap, polyalcohol and the like, although not particularly limited thereto.

The preparation of the material composition includes, although not particularly limited, mixing and kneading processes and, for example, a mixer, an attritor or the like may be used for the mixing process, and a kneader or the like may be used so as to carry out a sufficient kneading.

A preferable example of the method for molding the material composition includes, although not particularly limited, a molding process carried out by using the above-mentioned extrusion-molding process or the like so as to form a shape having cells.

Next, drying treatment is carried out on the resulting honeycomb molded body by using a drying apparatus, if necessary.

As the drying apparatus, examples thereof include: a microwave drying apparatus, a hot-air drying apparatus, a dielectric drying apparatus, a reduced-pressure drying apparatus, a vacuum drying apparatus, a freeze drying apparatus, and the like.

Next, a degreasing treatment is carried out on the optionally dried honeycomb molded body, if necessary.

The degreasing conditions are not particularly limited, and are appropriately determined depending on the kinds and amounts of organic substances contained in the molded body, and preferably set at about 400°C for about 2 hours.

Next, the honeycomb molded body dried and degreased depending on need is fired.

Although not particularly limited, the firing condition is preferably set in a range from 500 to 1200°C, and more preferably in a range from 600 to 1000°C.

The reason for this setting is because the firing temperature of less than 500°C tends not to allow the inorganic binder to exert the bonding function and also fails to allow the firing of ceramic particles and the like to progress, resulting in a reduction in the strength of the honeycomb fired body, and because the firing temperature exceeding 1200°C tends to cause the firing of ceramic particles and the like to progress too quickly, resulting in a reduction in the specific surface area per unit volume and the subsequent failure to sufficiently disperse the catalyst supported on it as a catalyst supporting carrier so as to convert exhaust gases in the honeycomb structured body configured by the honeycomb fired body.

By using these processes, a pillar-shaped honeycomb fired body having a number of cells longitudinally placed in parallel with one another with a cell wall therebetween is manufactured.

In the present specification, the shape indicated by the word "pillar" refers to any desired shape of a pillar including a round pillar, an oval pillar, a polygonal pillar and the like.

Next, the honeycomb fired bodies are combined with one another to form a honeycomb aggregated body having a predetermined size.

The honeycomb aggregated body may be formed by using, for example, a method in which an adhesive paste is applied to side faces of honeycomb fired bodies to form adhesive paste layers so that the honeycomb fired bodies are combined with one another, or a method in which respective honeycomb fired bodies are temporarily secured to a molding frame having almost the same shape as a ceramic block to be formed, and in this state, the adhesive paste is injected between the respective honeycomb fired bodies.

Examples of the adhesive paste include, although not particularly limited, a mixture of an inorganic binder and inorganic particles, a mixture of an inorganic binder and an inorganic fiber matter, a mixture of an inorganic binder, inorganic particles and an inorganic fiber matter, and the like.

Moreover, an organic binder may be added to each of these adhesive pastes.

Examples of the organic binder to be added to the adhesive paste include polyvinyl alcohol, methyl cellulose, ethyl cellulose, carboxymethyl cellulose, and the like, although not particularly limited thereto.

Each of these may be used alone or two or more kinds of these may be used in combination.

Here, the thickness of the adhesive layer is preferably set in a range from 0.5 to 5 mm.

The thickness of the adhesive layer of less than 0.5 mm might fail to obtain a sufficient combining strength, and since the adhesive layer is a portion that does not function as a catalyst supporting carrier, the thickness exceeding 5 mm tends to cause a reduction in the specific surface area per unit volume of the honeycomb structured body, making it difficult to highly disperse a catalyst sufficiently when the catalysts are supported thereon.

Moreover, the thickness of the adhesive layer exceeding 5 mm tends to cause an increase in the pressure loss.

Here, the number of the honeycomb fired bodies to be combined may be determined appropriately in accordance with the size of a honeycomb structured body. Moreover, after the honeycomb structured body has been heated so that the adhesive paste layers have been dried and solidified, cutting, grinding or the like is appropriately carried out, if necessary, to form ceramic blocks.

Next, if necessary, a sealing material paste is applied to the peripheral face of the ceramic block and dried to be solidified thereon to form a sealing material layer so that a honeycomb structured body is manufactured.

By forming the sealing material layer, the peripheral face of the ceramic block can be protected so that the strength of the honeycomb structured body is subsequently increased.

Although not particularly limited, the sealing material paste may be those including the same materials as the adhesive paste, or may be those including different materials.

Moreover, in the case where the sealing material paste is made from the same material as the adhesive paste, the compounding ratios of the components may be the same or different.

Although not particularly limited, the thickness of the sealing material layer is preferably set in a range from 0.1 to 2 mm. The thickness of less than 0 . 1 mm might fail to protect the peripheral face, resulting in failure to increase the strength; whereas, the thickness exceeding 2 mm tends to reduce the specific surface area per unit volume of the honeycomb structured body, resulting in failure to allow the catalyst to be sufficiently dispersed when the catalyst is supported thereon.

Moreover, in the present manufacturing method, after a plurality of honeycomb fired bodies have been combined with one another by interposing the adhesive layers (after forming the sealing material layer in the case where the sealing material layer is provided), calcination is preferably carried out.

This is because, in the case, for example, where an organic binder is contained in the adhesive layers and the sealing material layer, the organic binder can be degreased and removed.

The conditions of the preliminary firing process are appropriately determined depending on the kinds and amounts of the organic substances contained therein, and preferably set at about 700°C for about 2 hours.

A catalyst is supported on cell walls of the honeycomb structured body manufactured as described above.

The process for supporting the catalyst thereon is not particularly limited, as long as the method makes it possible to set the area occupied by the catalyst supported on the surface of the inorganic fiber matter to be 5% or less of the sum of the area occupied by the catalyst supported on the surface of the inorganic particles, the area occupied by the catalyst supported on the surface of the inorganic fiber matter and the area occupied by the catalyst supported on the surface of the inorganic binder. The following description will discuss a method by which the catalyst is supported through an impregnation method as one example of the processes.

Upon supporting the catalyst through the impregnation method, a honeycomb structured body is impregnated in a solution containing an anionic complex or a cationic complex serving as a catalyst metal so that the catalyst can be supported thereon.

Here, as to which portion of the cell walls the anionic complex or the cationic complex tends to be easily supported on, it is influenced by the relationship between the charge possessed by the complex and the surface potential of each of the substances forming the cell walls. In the case where the complex is a cationic complex, it is more likely supported on a portion whose surface potential is on the minus side, while in the case where the complex is an anionic complex, it is more easily supported on a portion whose surface potential is on the plus side.

Here, with respect to the isoelectric point of each of the inorganic particles, the inorganic fiber matter and the inorganic binder, which are main materials configuring the honeycomb structured body of the present invention, for example, the isoelectric point of γ-alumina (inorganic particles) corresponds to pH = 8.0, the isoelectric point of aluminum borate whiskers (inorganic fiber matter) corresponds to pH = 6. 0, and the isoelectric point of a silica binder (an inorganic binder, that is a solid component of silica sol) corresponds to pH = 3.0.

The surface potential of each of these substances upon impregnation in an electrolytic solution is set on the plus side when the isoelectric point of the substance is higher than the pH of the solution, and is set on the minus side when the isoelectric point of the substance is lower than the pH of the solution. For this reason, by adjusting the pH of the catalyst solution containing a catalyst upon supporting the catalyst according to the impregnation method, the surface potential of each of the substances that are present on the cell walls can be controlled. For example, in the case where the pH of the catalyst solution is adjusted to pH = 7 . 0, the surface potential of γ-alumina whose isoelectric point is higher than the pH of the catalyst solution is set on the plus side, while the surface potentials of aluminum borate whiskers and a silica binder whose isoelectric points are lower than the pH of the catalyst solution are set on the minus side.

Therefore, in the case where an anionic complex is used as the catalyst metal complex, the complex can be selectively supported on the surface of the substance having an isoelectric point higher than the pH of the catalyst solution and having a surface potential set on the plus side; whereas in the case where a cationic acid is used as the catalyst metal complex, the complex can be selectively supported on the surface of the substance having an isoelectric point lower than the pH of the catalyst solution and having a surface potential sent on the minus side.

Therefore, in the case where an anionic complex is used as the catalyst metal complex, with the surface potential of γ-alumina set to the plus side and the surface potentials of aluminum borate whiskers and a silica binder set to the minus side, the catalyst metal complex can be selectively supported on the surface of γ-alumina.

In order to manufacture the honeycomb structured body of the present invention, it is necessary to select the kinds of the catalyst metal complex and the inorganic fiber matter in such a manner that the catalyst metal complex is hardly supported on the surface of the inorganic fiber matter, and also necessary to adjust the pH of the catalyst solution. Moreover, at this time, the kinds of the inorganic fiber matter need to be selected and the pH of the catalyst solution also needs to be adjusted so as to make the plus and minus of the surface potential of the inorganic fiber matter and the surface potential of the inorganic particles are reversed to each other.

When the plus and minus of the surface potential of the inorganic fiber matter and the surface potential of the inorganic particles are set on the same side, the catalyst is supported on both of the surfaces of the inorganic fiber matter and the inorganic particles in the same manner undesirably.

Moreover, upon supporting the catalyst by such a method while controlling the portions for supporting the catalyst complex , the difference between the isoelectric point of the inorganic fiber matter and the isoelectric point of the inorganic particles is preferably made larger, and the difference of the isoelectric points is preferably pH = 1.5 or more. In the case where the difference between the isoelectric points is large, since the potential difference between the surface potential of the inorganic fiber matter and the surface potential of the inorganic particles in the catalyst solution becomes larger, it becomes possible to further reduce the amount of the catalyst to be supported on the surface of the inorganic fiber matter.

With respect to a desirable combination of the inorganic fiber matter and the inorganic particles with a large difference in the isoelectric points, for example, a combination in which silica fibers (isoelectric point pH = 2.0), silica-alumina fibers (isoelectric point pH = 3.9), or aluminum borate whiskers (isoelectric point pH = 6.0) is used as the inorganic fiber matter, and γ-alumina (isoelectric point pH = 8.0) is used as the inorganic particles; or a combination in which silica fibers or silica-alumina fibers are used as the inorganic fiber matter, and ceria (isoelectric point pH = 5.9) or the like may be exemplified as the inorganic particles, is proposed.

Here, the catalyst metal is not necessarily required to exist in the catalyst solution as an anionic complex or a cationic complex, and it may exist in the form of a metal anion or a metal cation. In this case also, it is possible to control the portions for supporting the catalyst in the same manner.

With respect to the catalyst solution which can be used for supporting the catalyst in this impregnation method, although not particularly limited, a solution of diammine dinitro platinum nitric acid, and an ethanol amine platinum (IV) solution may be used as a catalyst solution containing an anionic complex having platinum, that is a noble metal catalyst, as a catalyst metal. Moreover, examples of the catalyst solution containing a cationic complex include a hexaammine platinum (IV) chloride solution, a hexaammine platinum (IV) hydrate solution, a hexaammine platinum (IV) nitrate solution, a tetraammine platinum (II) chloride solution, a tetraammine platinum (II) hydrate solution, a tetraammine platinum (II) nitrate solution, and the like.

When the catalyst is supported by the aforementioned method, the catalyst is not uniformly supported on the constituent material forming the surface of the cell wall. Therefore, even in the case where the amount of the inorganic fiber matter contained in the honeycomb structured body prior to the support of the catalyst is large and the rate of the area occupied by the inorganic fiber matter on the surfaces of the cell walls exceeds 5%, it is possible to manufacture the honeycomb structured body of the present invention by reducing the amount of the catalyst to be supported on the surface of the inorganic fiber matter.

Here, a catalyst may be supported on the inorganic particles of the material.
If the catalyst is preliminarily supported on the inorganic particles of the material, since the catalyst supporting portions can be controlled so that the area occupied by the catalyst supported on the surface of the inorganic fiber matter is 5 % or less of the sum of the areas occupied by the catalyst supported on the surfaces of the inorganic particles, the inorganic fiber matter and the inorganic binder, thus it becomes possible to desirably manufacture the honeycomb structured body of the present invention.
Examples of the method for supporting the catalyst on the inorganic particles of the material include a coating method, a spraying method, an impregnation method, a deposition supporting method, an ion adsorption method, an exchanging method, a gaseous-phase supporting method, and the like.

Although not particularly limited, the honeycomb structured body (honeycomb catalyst) of the present invention on which a catalyst as mentioned above is supported can be used as, for example, a so-called three-way catalyst or NOx-absorbing catalyst used for converting exhaust gases from a vehicle.

EXAMPLES

The following description will discuss the present invention in detail by means of examples; however, the present invention is not intended to be limited by these examples.

(Example 1)

(Manufacture of honeycomb fired body)

(1) 2250 g of $\gamma$-alumina particles (average particle diameter: 2$\mu$m; isoelectric point: pH = 8.0; specific surface area: 220 m$^2$/g) , 680 g of aluminum borate whiskers (fiber diameter: 0.5 to 1 $\mu$m; fiber length: 10 to 30 $\mu$m; isoelectric point: pH = 6.0; specific surface area: 15 m$^2$/g) and 2600 g of silica sol (solid concentration: 30% by weight; isoelectric point: pH = 3.0; specific surface area of solid component: 100 m$^2$/g) were mixed, and to the resulting mixture were added 320 g of methylcellulose serving as an organic binder, 290 g of a lubricant (UNILUB, made by NOF Corp.) and 225 g of a plasticizer (glycerin), and the mixture was further mixed and kneaded to obtain a mixed composition. This mixed composition was extrusion-molded by using an extrusion molding machine so that a raw honeycomb molded body was obtained.

(2) Next, the raw honeycomb molded body was sufficiently dried by using a micro-wave drying apparatus and a hot-air drying apparatus, and further maintained at 400°C for 2 hours so as to be degreased.

Thereafter, the resulting product was maintained at 800°C for 2 hours to be fired so that a honeycomb fired body, which had a rectangular pillar shape (37 mm $\times$ 37 mm $\times$ 75 mm), a cell density of 93 cells/cm$^2$ (600cpsi), a thickness of a cell wall of 0.2 mm, and a rectangular (square) cross sectional shape of the cell, was obtained.

A solution of diammine dinitro platinum nitric acid ([Pt (NH$_3$) $_2$ (NO$_2$) $_2$]HNO$_3$ having a platinum concentration of 4.53 % by weight) was mixed with aqueous ammonia to be adjusted to pH = 7.0; thus a catalyst solution was prepared. Next, the honeycomb fired body was impregnated with this catalyst solution, dried at 110°C for 2 hours, and then fired at 500°C for 1 hour in a nitrogen atmosphere so that the catalyst was supported on the cell walls of the honeycomb fired body; thus, a honeycomb structured body configured of a single honeycomb segment was manufactured.

(Calculation of catalyst area on the surface of inorganic fiber matter)

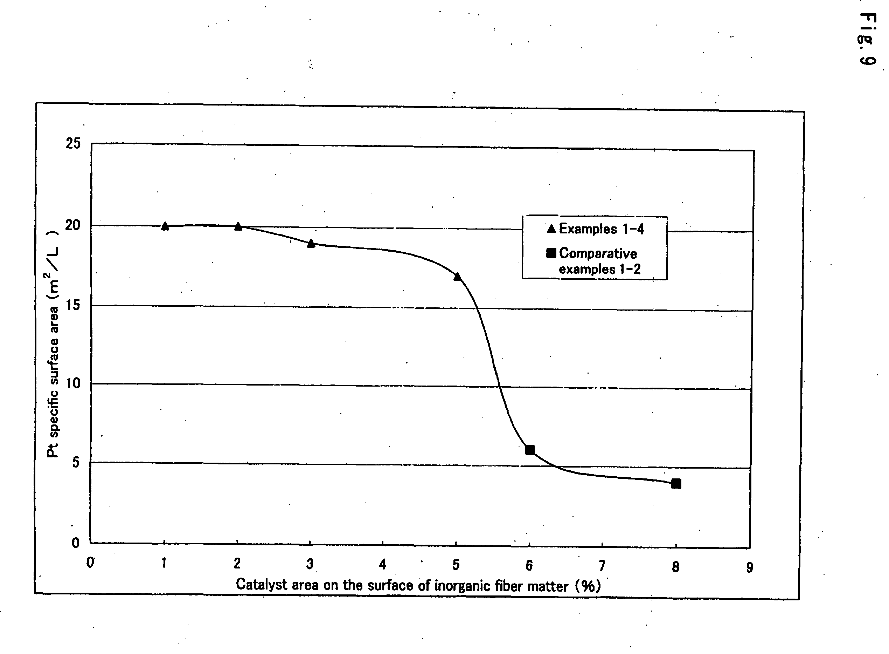

With respect to the honeycomb structured body manufactured in the present Example, optional five portions of the cell walls were cut out and each of the cell walls was photographed by using a TEM (FE-TEM HF-2000 made by Hitachi, Ltd.) at a magnification of 50,000 times and an acceleration voltage of 200 kV. In each of the photographs, the rate of the area occupied by the catalyst supported on the surface of the inorganic fiber matter to the sum of the areas occupied by the catalyst supported on the surfaces of the inorganic particles, inorganic fiber matter and the inorganic binder was calculated, and the average value of the rates of the areas in the five photographs was obtained. The resulting value was defined as a catalyst area (%) on the surface of the inorganic fiber matter. The results are as shown in Table 1 and Fig. 9.

(Heat treatment)

The honeycomb structured body manufactured in the present Example was heat-treated at 800°C for 25 hours in a firing furnace and then cooled to room temperature so that it has the same state as a honeycomb structured body which has been used as a catalyst supporting carrier for converting exhaust gases for a long period of time at high temperatures.

(Measurement of Pt specific surface area)

Next, a Pt specific surface area was measured.
Here, as the Pt specific surface area, a Pt specific surface area per unit volume of the honeycomb structured body, or in other words, a surface area of Pt contained in per apparent unit volume of the honeycomb structured body, was measured. In the present Example, the value was calculated in the following manner.
First, the honeycomb structured body was pulverized in a mortar for 30 minutes to prepare powder, and 2 g of the powder was collected, and heat-treated in the standard cell at 200°C for 15 hours for degassing. Thereafter, a BET specific surface area B ($m^2/g$) per unit weight of the honeycomb fired body was measured by BET specific surface area measuring method (BET multi-point method and Volumetric method in compliance with JIS R 1626 (1996)).
Moreover, the apparent density C (g/L) of the honeycomb fired body was calculated from the weight and the outline volume of the honeycomb fired body.
By using these, the Pt specific surface area S per unit volume of the honeycomb fired body was found from the following equation (1).

$$S\ (m^2/L)\ =\ B\ (m^2/g)\ \times\ C\ (g/L)\ \ldots\ Equation\ (1)$$

An ASAP 2010 (made by Micrometritics Inc.) was used as a measuring apparatus, and CO was used as an adsorbate.
In the case where CO is used as the adsorbate, since CO is selectively adsorbed in Pt, the specific surface area B ($m^2/g$) measured by the BET specific surface area measuring method corresponds to a value measured as the surface area of Pt contained per 1 g of the honeycomb structured body.
The measured results of the Pt specific surface area per unit volume, found in this manner, are as shown in Table 1 and Fig. 9.

(Examples 2 to 4, Comparative Examples 1 and 2)

A honeycomb structured body was manufactured in the same manner as Example 1, except that the inorganic fiber matter and the inorganic binder were changed as shown in Table 1.
Here, silica-alumina fibers, used as the inorganic fiber matter, had a fiber diameter in a range from 0.5 to 1$\mu$m, a fiber length in a range from 10 to 30$\mu$m, an isoelectric point of pH = 3.9 and a specific surface area of 20 $m^2/g$, and an alumina sol, used as a material for the inorganic binder, had a solid concentration of 30% by weight, an isoelectric point of pH = 8.0 and a solid component specific surface area of 200 $m^2/g$.
Each of these honeycomb fired bodies was immersed in a mixed solution with a pH value adjusted as shown in Table 1, in the same manner as Example 1, and then dried so that a catalyst was supported on the cell walls of the honeycomb fired body.
Here, the adjustment of pH was carried out by changing the concentration of aqueous ammonia to be mixed with the solution of diammine dinitro platinum nitric acid, and the catalyst solutions were adjusted so that Pt concentration of each of the mixed solutions was set to the same value in the respective Examples and Comparative Examples. Moreover, the catalyst area on the surface of the inorganic fiber matter and the Pt specific surface area were measured in the same manner as Example 1 for each of the honeycomb structured bodies.

The results of these measurements are as shown in Table 1 and Fig. 9.

[Table 1]

| | Inorganic particles | | | Inorganic fiber matter | | | Inorganic binder | | | Catalyst solution pH | Catalyst area (%) on surface of inorganic fiber matter (*2) | Pt specific surface area (m$^2$/L) |
|---|---|---|---|---|---|---|---|---|---|---|---|---|
| | type | Isoelectric point (pH) | Specific surface area (m$^2$/g) | type | Isoelectric point (pH) | Specific surface area (m$^2$/g) | type | Isoelectric point (pH) | Specific surface area (m$^2$/g) (*1) | | | |
| Example 1 | γ-alumina | 8.0 | 220 | Aluminum borate whisker | 6.0 | 15 | Silica sol | 3.0 | 100 | 7.0 | 5 | 17 |
| Example 12 | γ-alumina | 8.0 | 220 | Aluminum borate whisker | 6.0 | 15 | Alumina sol | 8.0 | 200 | 7.0 | 3 | 19 |
| Example 13 | γ-alumina | 8.0 | 220 | Silica-alumina fiber | 3.9 | 20 | Silica sol | 3.0 | 100 | 6.0 | 2 | 20 |
| Example 14 | γ-alumina | 8.0 | 220 | Silica-alumina fiber | 3.9 | 20 | Alumina sol | 8.0 | 200 | 5.0 | 1 | 20 |
| Comparative Example 1 | γ-alumina | 8.0 | 220 | Aluminum borate whisker | 6.0 | 15 | Silica Sol | 3.0 | 100 | 5.0 | 8 | 4 |
| Comparative Example 2 | γ-alumina | 8.0 | 220 | Silica-alumina fiber | 3.9 | 20 | Silica Sol | 3.0 | 100 | 3.0 | 6 | 6 |

(* 1) The specific surface area of an inorganic binder represents a specific surface area of the inorganic binder as a solid component.
(* 2) The catalyst area on the surface of the inorganic fiber matter represents the rate of the catalyst supported on the surface of the inorganic fiber matter that was obtained as a result of a TEM observation.

Fig. 9 is a drawing that schematically shows the relationship between the catalyst area on the surface of an inorganic fiber matter and the Pt specific surface area in each of Examples and Comparative Examples.

As clearly indicated by the results shown above, in the honeycomb structured bodies relating to Examples 1 to 4, the rate of the catalyst area on the surface of the inorganic fiber matter was 5% or less, and the Pt specific surface area after a heat treatment was in a range from 17 to 20 ($m^2$/L), which was a high value.

In particular, when the rate of the catalyst area on the surface of the inorganic fiber matter was 3% or less, the Pt specific surface area was in a range from 19 to 20 ($m^2$/L), which was a higher value.

In contrast, in the honeycomb structured bodies relating to Comparative Examples 1 and 2, the rate of the catalyst area on the surface of the inorganic fiber matter exceeds 5%, and the Pt specific surface area was in a range from 4 to 6 ($m^2$/L), which was a low value.

The Pt specific surface area was reduced, presumably because the Pt particles supported on the surface of the inorganic fiber matter having a low specific surface area tend to cause sintering.

In this manner, when the area occupied by the catalyst supported on the surface of the inorganic fiber matter is 5% or less of the sum of the area occupied by the catalyst supported on the surface of the inorganic particles, the area occupied by the catalyst supported on the inorganic fiber matter and the area occupied by the catalyst supported on the surface of the inorganic binder, as the honeycomb structured body of the present invention, it becomes possible to provide a high specific surface area of the catalyst even after the heat treatment, and consequently an exhaust-gas conversion performance can be maintained for a long period of time.

BRIEF DESCRIPTION OF THE DRAWINGS

Fig. 1(a) is a perspective view that schematically shows one example of a honeycomb structured body of the present invention; and Fig. 1(b) is a perspective view that schematically shows one example of a honeycomb segment.
Fig. 2 is a perspective view that schematically shows another example of the honeycomb structured body of the present invention.
Figs. 3(a) to 3 (g) are schematic drawings each of which shows one portion of an image of a cell wall of the honeycomb structured body of the present invention, photographed in an enlarged manner by an electron microscope.
Fig. 4 is a photograph that shows one example of an image of a cell wall of the honeycomb structured body of the present invention, which was taken at a magnification of 50,000 times by using an electron microscope.
Fig. 5 is a photograph that shows one example of an image of another cell wall provided in the same honeycomb structured body as shown in Fig. 4, which was taken at a magnification of 50,000 times by using an electron microscope.
Fig. 6 (a) is a perspective view that schematically shows inorganic fibers as an example of the material having a low specific surface area, and Fig. 6 (b) is a perspective view that schematically shows inorganic particles as an example of the material having a high specific surface area.
Fig. 7(a) is a cross-sectional view of Fig. 6(a) shown in a two-dimensional model obtained by cutting the three dimensional model through cross sections indicated by the shaded area shown in the figure so as to briefly explain the Fig. 6(a), and Fig. 7(b) is a cross sectional view of Fig. 6(b) shown in a two-dimensional model obtained by cutting the three dimensional model through cross sections indicated by the shaded area shown in the figure so as to briefly explain the Fig. 6(b).
Fig. 8(a) is an A-A line cross-sectional view of a honeycomb segment shown in Fig. 1(b), which schematically shows one example of a portion of a cell wall for microscopic observation, and Fig. 8 (b) is a cross-sectional view that schematically shows a sample for the microscopic observation, which is manufactured by grinding the portion of a cell wall for microscopic observation shown in Fig. 8(a).
Fig. 9 is a drawing that schematically shows the relationship between the catalyst area on the surface of an inorganic fiber matter and the Pt specific surface area in each of Examples and Comparative Examples.

EXPLANATION OF SYMBOLS

| | |
|---|---|
| 10, 50 | Honeycomb structured body |
| 21, 61 | Cell |
| 22, 62 | Cell wall |
| 30 | Inorganic particles |
| 31 | Inorganic fibers |
| 32 | Inorganic binder |
| 40, 40a, 40b, 40c, 40d | Catalyst |

**Claims**

1. A honeycomb structured body configured by a large number of cells longitudinally placed in parallel with one another with a cell wall therebetween, said cell wall comprising: inorganic particles; 5% by weight or more of an inorganic fiber matter; and an inorganic binder,
wherein
a catalyst is supported on said cell wall, and
an area occupied by the catalyst supported on a surface of said inorganic fiber matter is 5% or less of the sum of an area occupied by the catalyst supported on a surface of said inorganic particles, an area occupied by the catalyst supported on a surface of said inorganic fiber matter, and an area occupied by the catalyst supported on the surface of said inorganic binder.

2. The honeycomb structured body according to claim 1,
wherein
the area occupied by the catalyst supported on the surface of said inorganic fiber matter is 3% or less of the sum of the area occupied by the catalyst supported on the surface of said inorganic particles, the area occupied by the catalyst supported on the said inorganic fiber matter, and the area occupied by the catalyst supported on the surface of said inorganic binder.

3. The honeycomb structured body according to claim 1 or 2,
wherein
said inorganic fiber matter comprises inorganic fibers.

4. The honeycomb structured body according to claim 1 or 2,
wherein
said inorganic fiber matter comprises whiskers.

5. The honeycomb structured body according to claim 1 or 2,
wherein
said inorganic fiber matter comprises inorganic fibers and whiskers.

6. The honeycomb structured body according to any of claims 1 to 5,
wherein
said catalyst comprises a noble metal.

7. The honeycomb structured body according to any of claims 1 to 6, comprising a plurality of honeycomb segments combined with one another by interposing adhesive paste layers.

8. The honeycomb structured body according to any of claims 1 to 7, comprising a single honeycomb segment.

9. Use of the honeycomb structured body according to any of claims 1 to 8 for converting exhaust gases discharged from a vehicle.


**Patentansprüche**

1. Körper mit Wabenstruktur, aufgebaut durch eine grosse Anzahl von Zellen, die in Längsrichtung parallel zueinander mit einer Zellwand zwischen Ihnen angeordnet sind, wobei die Zellwand umfasst: anorganische Partikel, 5 Gew.% oder mehr eines anorganischen Fasermaterials; und ein anorganisches Bindemittel,
worin ein Katalysator auf der Zellwand geträgert ist und die Fläche, die von dem Katalysator besetzt ist, der auf einer Oberfläche des anorganischen Fasermaterials geträgert ist, 5 % oder weniger von der Summe einer Fläche, die von dem Katalysator, der auf einer Oberfläche der anorganischen Partikel geträgert ist, besetzt wird, einer Fläche, die von dem Katalysator, der auf einer Oberfläche des anorganischen Fasermaterials geträgert ist, besetzt wird, und einer Fläche, die von dem Katalysator, der auf einer Oberfläche des anorganischen Bindemittels geträgert ist, besetzt wird, beträgt.

2. Körper mit Wabenstruktur gemäss Anspruch 1, worin
die Fläche, die von dem Katalysator besetzt wird, der auf einer Oberfläche des anorganischen Fasermaterials geträgert ist, 3 % oder weniger von der Summe der Fläche, die von dem Katalysator besetzt wird, der auf der Oberfläche der anorganischen Partikel geträgert ist, der Fläche, die von dem Katalysator besetzt wird, der auf dem anorganischen Fasermaterial geträgert ist, und der Fläche, die von dem Katalysator besetzt wird, der auf der Oberfläche des anorganischen Bindemittels geträgert ist, beträgt.

3. Körper mit Wabenstruktur gemäss Anspruch 1 oder 2, worin das anorganische Fasermaterial anorganische Fasern umfasst.

4. Körper mit Wabenstruktur gemäss Anspruch 1 oder 2, worin das anorganische Fasermaterial Fadenkristalle umfasst.

5. Körper mit Wabenstruktur gemäss Anspruch 1 oder 2, worin das anorganische Fasermaterial anorganische Fasern und Fadenkristalle umfasst.

6. Körper mit Wabenstruktur gemäss irgendeinem der Ansprüche 1 bis 5, worin der Katalysator ein Edelmetall umfasst.

7. Körper mit Wabenstruktur gemäss irgendeinem der Ansprüche 1 bis 6, umfassend eine Vielzahl von Wabensegmenten, die miteinander durch dazwischenliegende Schichten von Klebemittelpaste kombiniert sind.

8. Körper mit Wabenstruktur gemäss irgendeinem der Ansprüche 1 bis 7, umfassend ein einzelnes Wabensegment.

9. Verwendung des Körpers mit Wabenstruktur gemäss irgendeinem der Ansprüche 1 bis 8 zum Umwandeln von Abgasen, die von einem Fahrzeug ausgestossen werden.

**Revendications**

1. Corps structuré en nid d'abeille configuré par un grand nombre de cellules placées longitudinalement les unes parallèlement aux autres avec une paroi cellulaire entre elles, ladite paroi cellulaire comprenant: des particules inorganiques; 5% en poids ou plus de matière en fibre inorganique; et un liant inorganique,
où
un catalyseur est soutenu sur ladite paroi cellulaire, et
une zone occupée par le catalyseur soutenu sur une surface de ladite matière en fibre inorganique est de 5% ou moins de la somme d'une zone occupée par le catalyseur soutenu sur une surface desdites particules inorganiques, d'une zone occupée par le catalyseur soutenu sur une surface de ladite matière en fibre inorganique, et d'une zone occupée par le catalyseur soutenu sur la surface dudit liant inorganique.

2. Corps structuré en nid d'abeille selon la revendication 1, dans lequel
la zone occupée par le catalyseur soutenu sur la surface de ladite matière en fibre inorganique est de 3% ou moins de la somme de la zone occupée par le catalyseur soutenu sur la surface desdites particules inorganiques, de la zone occupée par le catalyseur soutenu sur ladite matière en fibre inorganique, et de la zone occupée par le catalyseur soutenu sur la surface dudit liant inorganique.

3. Corps structuré en nid d'abeille selon la revendication 1 ou 2, dans lequel
ladite matière en fibre inorganique comprend des fibres inorganiques.

4. Corps structuré en nid d'abeille selon la revendication 1 ou 2, dans lequel
ladite matière en fibre inorganique comprend des trichites.

5. Corps structuré en nid d'abeille selon la revendication 1 ou 2, dans lequel
ladite matière en fibre inorganique comprend des trichites et des fibres inorganiques.

6. Corps structuré en nid d'abeille selon l'une des revendications 1 à 5, dans lequel
ledit catalyseur comprend un métal noble.

7. Corps structuré en nid d'abeille selon l'une des revendications 1 à 6, comprenant une pluralité de segments en nid d'abeille combinés entre eux en interposant des couches de pâte adhésive.

8. Corps structuré en nid d'abeille selon l'une des revendications 1 à 7, comprenant un seul segment en nid d'abeille.

**9.** Utilisation du corps structuré en nid d'abeille selon l'une des revendications 1 à 8, pour convertir des gaz d'échappement déchargés d'un véhicule.

Fig. 1

(a)

(b)

Fig. 2

Fig. 3

(a)

(b)

(c)

(d)

(e)

(f)

(g)

Fig. 4

Fig. 5

Fig. 6

(a)

(b)

Fig. 7

(a)

(b)

Fig. 8

(a)

**20**

A-A line cross-sectional view

(b)

Fig. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005218935 A
- US 4916107 A
- EP 1338326 A1
- EP 1736220 A1